# DEMANDE DE BREVET EUROPEEN

(11) **EP 0 832 591 A1**
(43) Date de publication de la demande: **01.04.1998**
(21) Numéro de dépôt: 97420156.8
(22) Date de dépôt: 29.08.1997
(51) Int. Cl.: A47J 27/14

(54) **Dispositif pour le refroidissement de produits alimentaires**

(30) Priorité: 30.08.1996 FR 9610806
(71) Demandeur: Christin et Cie, 38230 Pont de Cheruy (FR)
(72) Inventeur: Christin, Jacques, 38230 Pont De Cheruy (FR)
(74) Mandataire: Myon, Gérard Jean-Pierre

(57) **Abrégé**

Dispositif pour le refroidissement de produits alimentaires après leur cuisson, caractérisé en ce qu'il comprend un bac étanche (103a) apte à être rempli d'un liquide tel que de l'eau, et des moyens de refroidissement en continu dudit liquide.

## Description

La présente invention a trait à un dispositif pour le refroidissement de produits alimentaires après leur cuisson en vue de leur commercialisation immédiate.

On connaît par FR-A-2 626 741, un dispositif de refroidissement comprenant un bac dans lequel peut être plongé un panier contenant des aliments à refroidir. La réfrigération de ce bac est assurée par un compresseur de froid ou bien encore par du gaz carbonique.

On connaît également, par FR-A-2 614 766, un dispositif de refroidissement d'aliments comprenant une cuve dont le fond comporte une enveloppe double destinée à recevoir un liquide réfrigérant alimentaire.

Ces dispositifs présentent toutefois un inconvénient, en ce sens qu'ils ne permettent par un refroidissement très rapide des aliments qu'ils sont susceptibles de recevoir.

La présente invention vise à y remédier, en proposant un dispositif pour le refroidissement de produits alimentaires après leur cuisson, caractérisé en ce qu'il comprend un bac étanche apte à être rempli d'un liquide tel que de l'eau, et des moyens de refroidissement en continu de ce liquide.

Selon un premier mode de réalisation de l'invention, les moyens de refroidissement comprennent un premier circuit de refroidissement du liquide qui est disposé autour dudit bac étanche, un second circuit de refroidissement qui est placé à l'intérieur du bac entre son fond et une grille support, un panier qui prend appui sur la grille et dans lequel sont contenus les produits alimentaires à refroidir, un couvercle permettant la fermeture du bac et une unité de refroidissement à laquelle sont raccordés les premier et second circuits de refroidissement.

Selon un second mode de réalisation de l'invention, les moyens de refroidissement du liquide comprennent une boucle de refroidissement comportant un organe de refroidissement, des moyens permettant de soutirer le liquide à refroidir depuis le bac jusqu'à l'organe de refroidissement, des moyens permettant d'alimenter le bac en liquide refroidi depuis l'organe de refroidissement, et des moyens assurant la circulation du liquide le long de la boucle de refroidissement.

Le dessin annexé, donné à titre d'exemple, permettra de mieux comprendre l'invention, les caractéristiques qu'elle présente et les avantages qu'elle est susceptible de procurer:
- La figure 1 est une vue en perspective montrant un appareil de refroidissement et de cuisson de produit alimentaires, conforme à l'invention.
- La figure 2 est une coupe illustrant l'appareil de la figure 1 équipé d'un dispositif de refroidissement conforme à un premier mode de réalisation de l'invention.
- La figure 3 est une coupe analogue à la figure 2, dans laquelle le dispositif de refroidissement est conforme à un second mode de réalisation de l'invention.
- Les figures 4 et 5 sont des vues schématiques représentant la mise en place du panier contenant les produits alimentaires à l'intérieur du dispositif de refroidissement représenté à la figure 2.

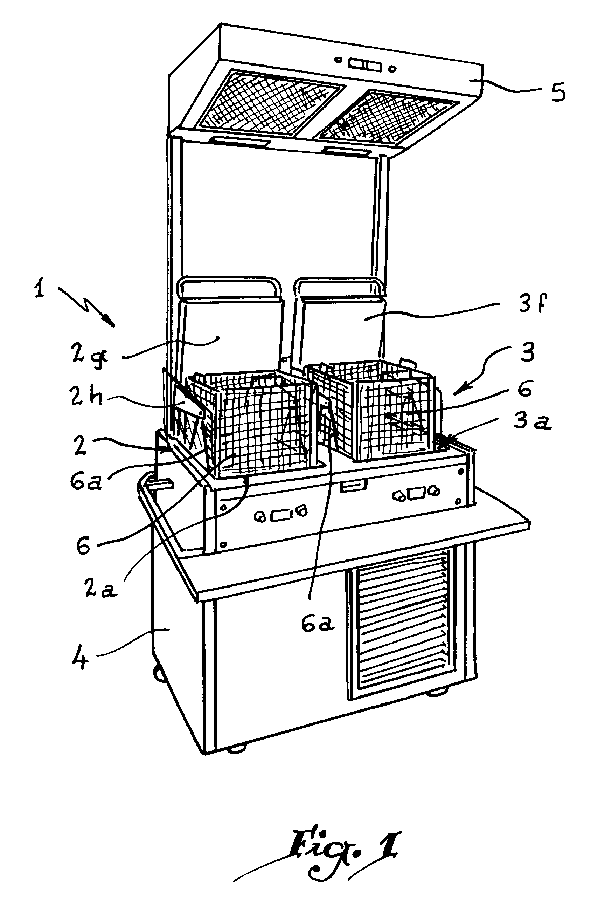

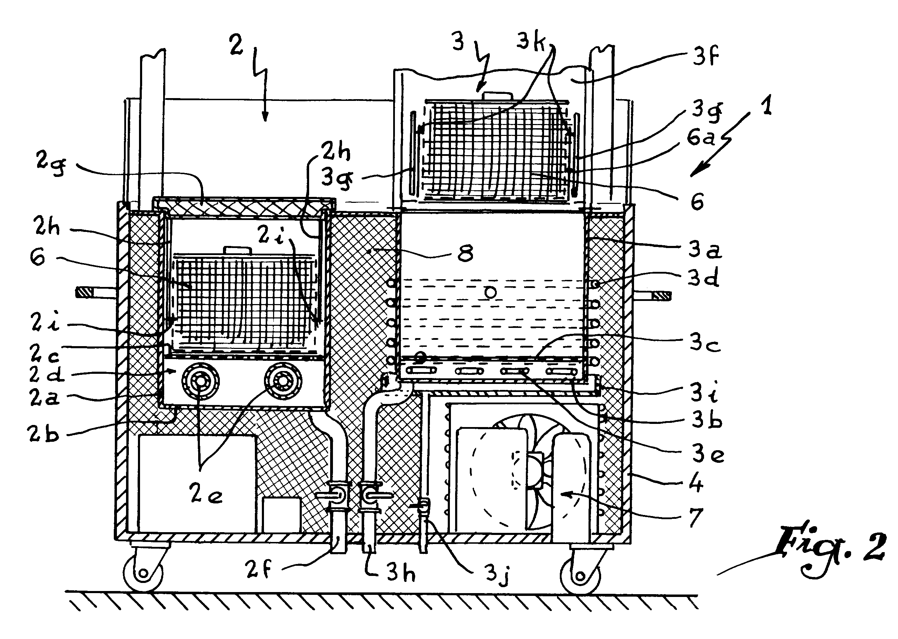

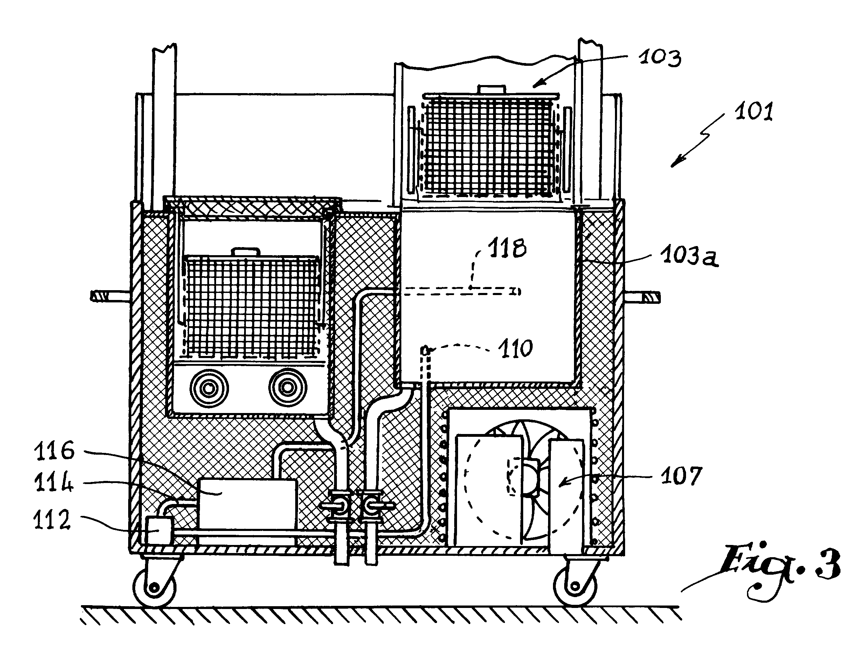

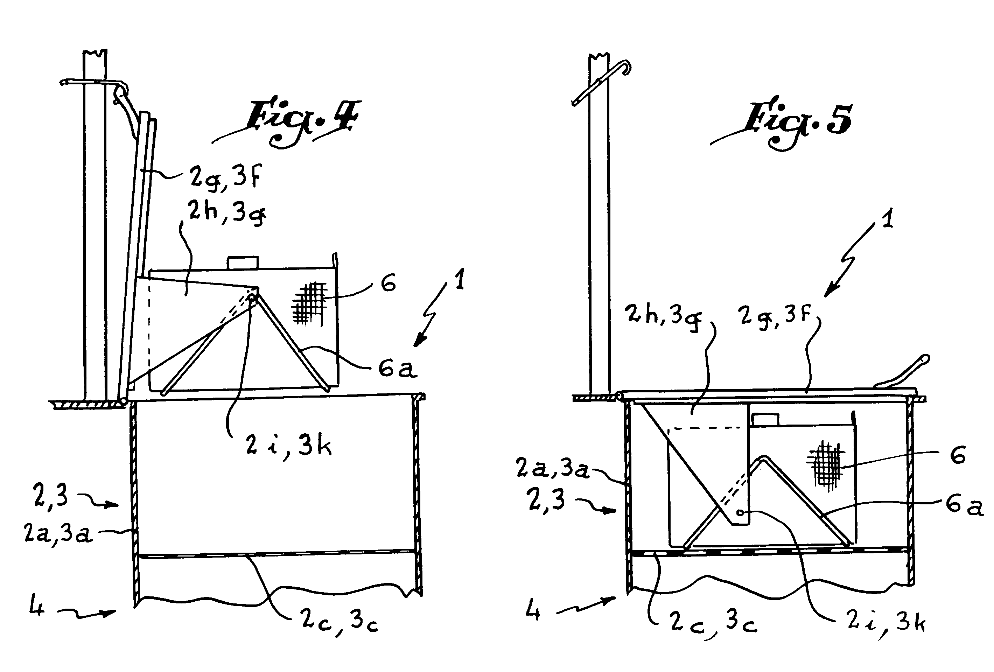

En figures 1 et 2, on a représenté un appareil 1 permettant d'une part la cuisson au bain-marie de produits alimentaires, et d'autre part le refroidissement instantané desdits produits alimentaires après leur cuisson.

L'appareil 1 comporte un dispositif de cuisson 2 et un dispositif de refroidissement 3.

Les deux dispositifs 2 et 3 sont placés l'un à côté de l'autre dans un châssis 4 solidaire d'une hotte aspirante 5 qui est disposée au-dessus de l'ouverture desdits dispositifs 2 et 3.

Le dispositif de cuisson au bain-marie 2 est constitué d'un bac étanche 2a rempli d'eau comportant au voisinage de son fond 2b une grille parallèle 2c afin de délimiter un espace 2d également rempli d'eau. Dans l'espace 2d sont disposées des résistances électriques 2e permettant l'échauffement de l'eau contenue dans le bac 2a. Ce dernier est alimenté en eau au niveau de son fond 2b au moyen d'une canalisation 2f. Le bac 2a est destiné à recevoir un panier 6 dans lequel sont disposés les produits alimentaires à cuire. Le dispositif de cuisson 2 est fermé au moyen d'un couvercle 2g qui est articulé sur le châssis 4 de l'appareil 1. Le couvercle 2g comporte des équerres parallèles 2h solidaires chacune d'un doigt 2i coopérant avec une anse 6a fixée sur le panier 6. Ainsi, le couvercle 2g permet, lors de son ouverture ou de sa fermeture, le retrait du panier 6 du bac 2a ou son introduction dans ce dernier.

Le dispositif de refroidissement 3 illustré à la figure 2 comporte un bac étanche 3a à l'intérieur duquel est disposée une grille 3c au voisinage de son fond 3b. Autour du bac 3a est prévu un premier circuit de refroidissement 3d qui est raccordé à une unité de refroidissement 7.

Un second circuit de refroidissement 3e est disposé à l'intérieur du bac 3a entre le fond 3b et la grille 3c. Le second circuit 3e est également raccordé à l'unité de refroidissement 7.

Le bac 3a comporte un couvercle 3f identique à celui 2g du dispositif de cuisson 2. Le couvercle 3f comporte des équerres 3g solidaires chacune d'un doigt 3k coopérant avec l'anse 6a du panier 6 pour la mise en place de ce dernier à l'intérieur du bac 3a.

Le bac 3a du dispositif 3 de refroidissement est raccordé à une canalisation 3h permettant la remise à niveau en liquide, et plus particulièrement en eau.

En dessous du bac 3a, on a disposé une goulotte 3i pour la récupération des gouttes de condensation provenant du premier circuit de refroidissement 3d. Bien évidemment, cette goulotte 3i est raccordée à une canalisation 3j pour l'évacuation des eaux de condensation. On note que l'appareil 1 comprend un matériau isolant 8 de grande densité qui est disposé entre le dispositif de cuisson 2 et le dispositif de refroidissement 3 afin d'éviter tout échange calorifique entre le bac 2a de cuisson et le bac 3a de refroidissement.

L'appareil 101 représenté à la figure 3 diffère de celui 1 des figures 1 et 2, en ce que son dispositif de refroidissement 103 comprend d'autres moyens de refroidissement de l'eau contenue dans son bac étanche.

Ce dispositif de refroidissement 103 comporte un bac étanche 103a susceptible d'être rempli d'eau, mis en relation avec une boucle assurant le refroidissement en continu de cette eau. Cette boucle comprend une première conduite 110 piquée au niveau du fond du bac 103a. Cette dernière est mise en communication avec une pompe 112 assurant l'aspiration du liquide au sein de la conduite 110, à l'intérieur du bac 103a. Un tuyau 114 est disposé en aval de la pompe 112, dans le sens de circulation du liquide. Ce tuyau débouche dans un évaporateur coaxial 116 de type connu en soi, au sein duquel le liquide, en provenance du bac via la conduite 110 et la pompe 112, est admis en vue de son refroidissement. Cet évaporateur 116 est raccordé à une unité de refroidissement 107 analogue à celle 7 des figures précédentes. Une seconde conduite 118, disposée en aval de l'évaporateur coaxial 16, assure l'alimentation en liquide refroidi du bac 103a.

La première conduite 110 assure la circulation du liquide depuis le bac jusqu'à l'évaporateur 116, et la seconde conduite 118 assure la circulation de ce liquide depuis l'évaporateur jusqu'au bac.

Pour une meilleure circulation du liquide au sein de la boucle de refroidissement, le déboucher de la seconde conduite 118 dans le bac est placé au-dessus du déboucher de la première conduite 110.

Ce dispositif de refroidissement 103 est dépourvu des premier et second circuits de refroidissement 3d et 3e, de la grille support 3c ainsi que de la canalisation 3j et de la goulotte 3i, représentés à la figure 2. Tous les autres éléments de l'appareil 101 représenté sur cette figure 3, sont analogues à ceux de l'appareil 1 décrit en référence aux figures 1 et 2.

L'utilisation de l'appareil 1 décrit ci-dessus se comprend aisément. En effet, il suffit de placer des produits alimentaires dans un panier 6 et de l'introduire à l'intérieur du dispositif de cuisson 2, et plus particulièrement dans le bac 2a. A l'intérieur du bac 2a, l'eau est maintenue à une température avoisinant les 100°, afin de cuire au bain-marie les aliments ou produits alimentaires.

Dès que les produits alimentaires sont cuits, il suffit de sortir le panier 6 du bac 2a au moyen du couvercle 2g et de le placer sur les équerres 3g du couvercle 3f du dispositif de refroidissement 3. Le couvercle 3f est ensuite fermé pour placer le panier 6 à l'intérieur du bac 3a afin que les produits alimentaires contenus dans ledit panier soient immédiatement refroidis (figures 4 et 5). En effet, l'eau contenue à l'intérieur du bac 3a est maintenue à une température avoisinant 1°. On note que le dispositif de refroidissement 3 comporte un système d'oxygénation non représenté afin que l'eau contenue à l'intérieur du bac 3a soit perpétuellement en mouvement pour éviter tout risque de cristallisation de cette dernière.

Dès que les produits sont refroidis à l'intérieur du bac 3a, il suffit d'ouvrir le couvercle 3f pour soulever et retirer le panier 6 à l'extérieur du bac 3a (figures 4 et 5).

On a décrit ci-dessus l'utilisation de l'appareil équipé du dispositif de refroidissement 3 illustré à la figure 2. Il va de soi que l'utilisation de l'appareil équipé du dispositif 103 illustré à la figure 3 est analogue.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

## Revendications

1. Dispositif pour le refroidissement de produits alimentaires après leur cuisson, caractérisé en ce qu'il comprend un bac étanche (3a ; 103a) apte à être rempli d'un liquide tel que de l'eau, et des moyens de refroidissement en continu dudit liquide.

2. Dispositif selon la revendication 1, caractérisé en ce que les moyens de refroidissement du liquide comprennent un premier circuit de refroidissement (3d) qui est disposé autour dudit bac étanche, un second circuit de refroidissement (3e) qui est placé à l'intérieur du bac (3a) entre son fond (3b) et une grille support (3c), un panier (6) qui prend appui sur la grille (3c) et dans lequel sont contenus les produits alimentaires à refroidir, un couvercle (3f) permettant la fermeture du bac (3a) et une unité de refroidissement (7) à laquelle sont raccordés les premier et second circuits de refroidissement.

3. Dispositif suivant la revendication 2, caractérisé en ce que le bac étanche (3a) comporte un système d'oxygénation de l'eau afin d'éviter la cristallisation de cette dernière.

4. Dispositif suivant la revendication 2, caractérisé en ce que le couvercle (3f) comporte des équerres parallèles (3g) permettant l'extraction et la mise en place du panier (6).

5. Dispositif suivant la revendication 2, caractérisé en ce que le bac (3a) comporte au-dessous de son fond (3b) une goulotte (3i) permettant la récupération des eaux condensées provenant du circuit de refroidissement (3d).

6. Dispositif suivant la revendication 1, caractérisé en ce que lesdits moyens de refroidissement du liquide comprennent une boucle de refroidissement comportant un organe de refroidissement (116), des moyens (110) permettant de soutirer le liquide à refroidir depuis le bac (103a) jusqu'à l'organe de refroidissement, des moyens (118) permettant d'alimenter le bac en liquide refroidi depuis l'organe de refroidissement (116), et des moyens (112) assurant la circulation du liquide le long de ladite boucle de refroidissement.

7. Dispositif suivant la revendication 6, caractérisé en ce que ledit organe de refroidissement est un évaporateur coaxial (116) raccordé à une unité de refroidissement (107).

8. Dispositif suivant les revendication 6 ou 7, caractérisé en ce que lesdits moyens de soutirage de liquide à refroidir comprennent une première conduite (110) assurant la circulation du liquide depuis le bac (103a) jusqu'à l'organe de refroidissement, le débouché de ladite première conduite étant disposé au voisinage du fond du bac.

9. Dispositif suivant la revendication 8, caractérisé en ce que lesdits moyens d'alimentation en liquide refroidi comprennent une seconde conduite (118) assurant la circulation du liquide depuis l'organe de refroidissement jusqu'au bac, le débouché de ladite seconde conduite dans le bac étant placé au-dessus du débouché de ladite première conduite dans le bac.

10. Appareil pour la cuisson et le refroidissement de produits alimentaires, caractérisé en ce qu'il comprend un dispositif de cuisson (2) et un dispositif de refroidissement (3 ; 103) conforme à l'une des revendications 1 à 9, qui sont placés à l'intérieur d'un châssis (4) et séparés l'un de l'autre au moyen d'un isolant compact (8).

11. Appareil suivant la revendication 10, caractérisé en ce que le dispositif de cuisson (2) est pourvu d'un bac (2a) fermé par un couvercle (2g), et de résistances électriques (2e) disposées entre le fond (2b) du bac (2a) et une grille support (2c).
